# EUROPEAN PATENT APPLICATION

(11) **EP 4 575 683 A1**
(43) Date of publication of application: **25.06.2025**
(21) Application number: 23218728.6
(22) Date of filing: 20.12.2023
(51) Int. Cl.: G05B 17/02, G06F 16/901, G06Q 10/04

(54) **METHOD FOR DETERMINING A PREDICTED VALUE OF A TARGET PRODUCTION PARAMETER OF AN INDUSTRIAL PLANT SITE**

(71) Applicant: BASF SE, 67056 Ludwigshafen am Rhein (DE)
(72) Inventor: Arcos-Diaz, Dario, 67061 Ludwigshafen am Rhein (DE); Becker, Markus Bernhardt, 67061 Ludwigshafen am Rhein (DE); Beckert, Verena, Zhanjiang, Guangdong 524076 (CN); Engel, Daniel, 67061 Ludwigshafen am Rhein (DE); Pack, Robert, 67061 Ludwigshafen am Rhein (DE)
(74) Representative: Eisenführ Speiser

(57) **Abstract**

The invention refers to a method and to an apparatus for determining a predicted value of a target production parameter of an industrial plant site. Based on an ascertained graph database model, where production parameters are associated to one or more respective graph elements that include graph nodes and graph edges, and production data indicative of values of the production parameters, individual-element features are created. For at least one graph node, a graph-based feature is generated by performing an aggregation operation using the values associated to the graph node and at least an additional neighbouring graph element. The individual-element features and the graph-based features are fitted for obtaining a regression model that is used to determine the predicted value of the target production parameter.

## Description

### FIELD OF THE INVENTION

The present invention is directed to a computer implemented method for determining a predicted value of a target production parameter of an industrial plant site. The invention is also directed to an apparatus for determining said predicted value, to control signals generated by said method or said apparatus, to the use of the apparatus for controlling and/or monitoring an industrial plant site, and to a computer program product of controlling and/or monitoring one or more industrial plant site. Additionally, the invention is directed to a computer implemented method for determining a regression model, to an apparatus for determining said regression model and to the use a of computer implemented method for determining a regression model and/or the apparatus for determining the regression model for training a machine learning engine.

### BACKGROUND OF THE INVENTION

An industrial plant, such as a chemical plant, processes multiple inputs, such as material components, utilities, electricity, etc., and generates outputs, such as material products and waste, usually by carrying out multiple chemical reactions and phase changes in a complex network of steps. Modern chemical plants include sensors of diverse types, such as temperature sensors, pressure sensors, concentration sensors, mass flow sensors, to name a few, that measure different variables at separate locations along the network of steps. Typically, machine learning models can be trained to predict a value of a given production parameter under analysis, a so-called target production parameter, from a set of data features.

### SUMMARY OF THE INVENTION

The inventors have realized that traditional models, such as, for example, linear regression, do not take advantage of the network structure of the available data and treat all element of the industrial plant as being independent from each other and ignoring that many elements are connected with each other, thereby discarding valuable information. It is therefore an object of the present invention to provide suitable tools for enabling a more accurate determination of a predicted value.

According to a first aspect of the present the invention, a computer implemented method for determining a predicted value of a target production parameter of an industrial plant site is disclosed. The method comprises ascertaining, i.e. receiving and/or determining, a graph database model associated to the industrial plant site. The graph database model comprises graph elements that include graph nodes, or nodes, and graph edges, or edges. The graph edges are indicative of relations between those graph nodes connected by a respective graph edge. In the graph database model one or more respective production parameters are associated to one or more respective graph elements.

The method also comprises ascertaining, i.e., receiving or determining, production data of the industrial plant site. The ascertained production data is indicative of values of the production parameters. The method then comprises associating the respective values of the production parameters to the graph element to create individual-element features that depend on the ascertained value of the production parameter for a respective graph element.

The method also comprises generating, for one or more graph nodes of the graph base database model, a respective graph-based feature by performing an aggregation operation using the values of the production parameters of the graph node itself and at least of an additional graph element selected in accordance to a predetermined aggregation node selection rule.

The method then further includes fitting the individual-element features and the graph-based features for obtaining a regression model; and using the regression model, determining the predicted value of the target production parameter of the industrial plant site.

The method of the first aspect of the invention refers to a computer implemented method and can thus be performed by a general or dedicated computer adapted to perform the method, for instance, by executing a respective computer program.

The graph database model is formed by a graph database. Generally, a graph database is a database that uses graph structures with nodes, edges and properties to represent and store data, wherein data items are stored related to the collection of nodes and edges of a graph database. In this context, edges of the graph database represent a relationship between nodes connected by the respective edges. Nodes represent items of interest for which respective relations are tracked by the graph database. Moreover, properties refer to information related to a respective node item. Thus, a graph database does not only allow to store data pertaining to data items the industrial plant site but also to store relationships between the data items and properties of the data items, such that the data is linked together in a context-sensitive way, such that respective complex data structures can be visualized and queried. At least a part of the graph database comprises graph elements, i.e., graph nodes and/or graph edges, associated with production parameters. The production parameters are parameters that are associated to, and/or describe, one or more production steps carried out in the industrial plant, such as, but not limited to, type of material used in a given step, physical quantities related to a process step, such as a storage capacity value of a batch reactor, maximal flow rate through a connecting pipe, etc., operation parameters for a given reaction, such a nominal or set temperature, flow, pressure, etc., in-situ current detected values of said operation parameters, or any other production parameter related to a production step carried out in the industrial plant site. The method is configured to associate the values of the production parameters, which can be extracted from the ascertained production data, to the relevant graph element of the graph database model. For instance, in a non-limiting example, a graph node (node element) corresponding to "tank A" is associated to a production parameter "capacity". The ascertained production data reveals that the value for the product parameter "capacity" of "tank A" is 100 litres. The method then assigns the value "100" to the product parameter "capacity" of the graph element (node) "tank A". Also exemplarily, a second graph element (node) can be "batch reactor A" and the graph database model reflects that the node element "tank A" and the node element "batch reactor A" are linked by a graph edge, representing for example a connection between them via "connection line A". This graph edge labelled as "connection line A" is, for example, associated to production parameters "maximal flow" and "current flow". The ascertained production data may be indicative of the values of these particular production parameters and the values can then be assigned to the production parameters associated to the node element, in this case the node edge "connection line A".

An individual-element feature thus corresponds to a graph element with one or more associated production parameters that are assigned a respective value in accordance with the ascertained production data. The values assigned individual-element features depend only on the individual graph element (node or edge) in question and not on those of other graph elements in the graph database model.

According to the invention, the method of the first aspect of the invention advantageously generates, for one or more graph nodes, a respective graph-based feature. The graph-based feature differs from the individual-element feature in that the value assigned is determined using the value of the node itself and of at least an additional graph element (node or edge) other than the node itself. The determination includes performing an aggregation operation using the values of the production parameters assigned to the graph node itself and to the at least one additional graph element, in accordance with the predetermined aggregation node selection rule. Thus the graph-based feature, contrary to the individualgraph feature, reflects the connectedness of the graph elements within the graph database model, which in turn reflect the topology of the industrial plant site.

The individual-element features and the graph-element features are then fitted for obtaining the regression model used to determine the predicted value of the target production parameter.

The regression model is used to determine a predicted value, i.e., to predict a value of a given production parameter under analysis, namely the target production parameter, from a set of production data indicative of a set of test parameters defining a production process, real or fictive, carried out in the industrial plant site. The quality of the predictions depends on the data content of the production data. The determination of the predicted value can be used to predict the outcome of a certain value of a target product parameter given a set of input values in order to gain information about the implications that changing a value of a production parameter has on the production process, in particular on the value, or values, of the target production parameter or parameters. A major disadvantage of the known methods for determining a predicted value of a production parameter under analysis is that the individual-element features are assumed to be independent from each other. Even though this assumption may be true form some graph nodes, e.g., the quantity of input material A (an exemplary value of a production parameter associated to a node representing a first material input) may be independent from the quantity of input material B (an exemplary value of another production parameter associated to a node representing a second material input), there are other cases in which this assumption is not correct, due, for example, to the fact that sensors are located upstream/downstream from each other and the connection or transport lines, reactors, tanks, etc., to which they are attached to, are usually connected in a network in accordance with the topology of the industrial plant site. Traditional models ignore the graph structure or, in other words, the topology of the plant, with a negative impact on the quality of the predictions.

However, the method of the first aspect of the invention takes advantage of the connectedness of the production data by extracting the graph-based features using the underlying graph structure, and further using this graph-based features for obtaining the regression model that is used to determine the predicted value. In other words, the graph-based features encapsulate information coming not only from the individual node element itself, but also from neighbouring nodes, thereby containing more significant or richer information than the traditionally created individual-element features, and resulting in a more accurate determination of the predicted value of the target production parameter.

In the following, embodiments of the method of the first aspect will be discussed.

Generally, for obtaining the regression model, the computer implemented method of the first aspect of the invention, includes three main stages, namely contextualizing data in a graph structure, i.e., the graph database model, as a first stage; determining the individual-element features as a second stage; and determining the graph-based features as a third stage. The regression model is obtained using known regression analysis tools. In statistical modeling, regression analysis is a set of statistical processes for estimating the relationships between a dependent variable, referred to, among others, as outcome, response, or label, and one or more independent variables, referred to, among others, as predictors, covariates, explanatory variables or features. The regression model is not limited to a linear regression model, and can also be a nonlinear regression model such as a higher order polynomial regression model, a multilevel model, etc. Once the regression model is established, a set of input values of a set of production parameter can be used to predict the value of a target production parameter.

Generally, it is preferred that the graph database model represents, for example, as digital twin, a production Verbund comprising one or more industrial plant sites. The graph database model is preferably generated using graph-based context modeling.

In a preferred embodiment the graph database model is generated utilizing a set of typed nodes and edges. Typing is defined as providing predefined types of nodes and edges. For example, a type of node can be defined for representing production data and another type of node can be defined for representing a production asset. Preferably, the graph database model represent the Verbund operation asset hierarchy in a geographic context. For example, operation assets can be represented related to a region directing to a site directing to a cluster directing to a plant directing to a process group directing to an operation unit. This allows for a clear structuring of the operation assets in the graph database model. Further, it is preferred that transport processes between operation units and/or process groups are also represented by the graph database model.

In order for the graph database model to represent parts of the production data that is available on different independent systems, respectively types dedicated nodes and crosslink edges are utilized to reference these systems. Preferably, the graph database model represents production data, for example, in its corresponding context of organization, accounting, production planning, reporting, and geo features. Preferably, the hierarchy level of the industrial plant site is selected for the present invention. The available data can be contextualized as node attributes or edge attributes in the graph database model. For instance, a time series of sensor readings as ascertained production data is associated to an individual sensor tag position in the plant.

In a preferred embodiment, the individual-element features, which are features than only rely on available data for a respective single node element in the graph database model, comprise static features indicative of graph elements associated to a production parameter having a constant value, and dynamic features indicative of a graph elements associated to a production parameter having a variable value, in particular in the form of a time-series comprising values of the production parameters at different points in time. The static features can therefore include, for example, material data (e.g., material input, type of stored material, etc.,), physical data (e.g., maximum capacity of a tank, maximum flow through a pump or line, etc.), set parameters for a given process step (e.g., temperature, flow, time etc.), and the dynamic features can therefore include, for example, sensor time series data, for instance measured or otherwise determined by a corresponding sensing unit, such as flow, temperature, pressure, etc.

Preferably, the individual-element features generated from static data, i.e., the static features, form a first feature matrix, and the individual-element features generated from dynamic data, i.e., the dynamic features, form a second feature matrix.

The graph-based features according to the invention, which are the features that capture information from additional graph elements (and therefore the underlying graph structure in which it is located) and are created by performing the aggregation operation, form a third feature matrix.

Preferably, in an embodiment, the aggregation operation performed on a set of input values, i.e., the values of the production parameters of the graph node itself and at least of an additional graph element selected in accordance to a predetermined aggregation node selection rule, includes one or more of the operations selected from the group comprising addition, subtraction and/or multiplication of two or more values of the set of input values, minimum value of the values of the set of input values, maximum value of the values of set of input values, a count, a statistical average (e.g. mean, media, mode) of the values of the set of input values, and a standard deviation of the values of the set of input values. In general, aggregation operations having a commutative property i.e., where the order of the operands is irrelevant) can be used as an aggregation operation.

In a particular embodiment, the aggregation node selection rule includes performing the aggregation operation using the values of the product parameters of neighbouring graph nodes up to a predetermined neighbouring level with respect to the respective graph node. In this embodiment, the neighbouring level is a node-neighbouring level for a node-aggregation operation. An N^{th} neighbouring-level corresponds to an aggregation operation including up to N^{th}-order neighbouring node elements. For example, a node-aggregation operation of a 1^{st} neighbouring level implies using the values of one or more 1^{st} order neighbouring nodes to generate the corresponding graph-based feature. N^{th}-order neighbour node elements are those node elements that are connected to the corresponding nodes via N edges elements, i.e., with N-1 intermediate node elements. The neighbouring level can be defined for predecessor nodes, i.e. those node elements located upstream of the corresponding node element, for successor nodes, i.e., those node elements located downstream of the corresponding node element, or for both predecessor and successor nodes. Preferably, the neighbouring level corresponds to half of the diameter d of the graph database model. The diameter d of a graph is defined as the length of the shortest path between the most distanced nodes. The diameter d measures the extent of a graph and the topological length between two nodes. A general aggregation node selection rule can be stated as: "for one or more node elements of the graph database model, perform a corresponding aggregation operation using the values of the individual-element features over one or more neighbouring node elements". The aggregation operation can be perform over a subset or all 1^{st}, 2^{nd}... N^{th} order neighbours and can be based on predecessor nodes, successor nodes or both. Examples of aggregation node selection rules in combination with an aggregation operation include "average set temperature of all predecessor 2^{nd} order neighbour nodes" or "maximum density of materials from all predecessor 1^{st} order neighbour nodes".

In another embodiment, the aggregation node selection rule additionally or alternatively includes performing the aggregation operation using the values of the product parameters of graph edges connected to the respective graph node. Here, an edge-aggregation operation of a 1^{st} neighbouring level implies using the values of one or more 1^{st} order neighbouring edges elements, i.e., those graph edges (edge elements) directly connected to the node element, to generate the corresponding graph-based feature. Optionally, when the edge elements have a defined direction, i.e., have a start and an end and symbolize a flow from the start towards the end, the aggregation operation can be performed using only the values of incoming graph edges that end at the node element or using only the values of outgoing graph edges that start at the node element. Thus, the neighbouring level can be defined for incoming edge elements or outgoing edges. Examples include, "sum of all incoming mass flows into a node element" or "average temperature of all outgoing flows from a node element".

According to a second aspect of the invention, an apparatus for determining a predicted value of a target production parameter of an industrial plant site is disclosed. The apparatus comprises a model ascertainment unit configured to ascertain, that is, to receive and/or to determine, a graph database model associated to the industrial plant site. The graph database model comprises graph elements including graph nodes and graph edges, wherein the graph edges are indicative of relations between those graph nodes connected by a respective graph edge, wherein a respective graph element is associated to a respective production parameter. The apparatus also comprises a data ascertaining unit configured to ascertain, i.e., to determine and/or to receive, production data of the industrial plant site indicative of values of the production parameters and to associate the respective values of the production parameters to the graph element to create individual-element features that depend on the ascertained value of the production parameter for a respective graph node. The apparatus further comprises an aggregation unit configured to generate, for one or more graph nodes of the graph base database model, graph-based features by performing an aggregation operation using the values of the production parameters of the graph node itself and at least of an additional graph element selected in accordance to a predetermined aggregation node selection rule. The apparatus also comprises a fitting unit configured to fit the individual-element features and the graph-based features for obtaining a regression model, and a prediction unit configured to determine, using the regression model, the predicted value of the target production parameter of the industrial plant site.

The apparatus of the second aspect of the invention thus shares the advantages of the computer implemented method of the first aspect of the invention.

In the following, embodiments of the apparatus of the second aspect will be described.

In a particular embodiment the model ascertainment unit is configured as a model generating unit that is configured to receive industrial plant site topology data indicative of a topology of the industrial plant site, to receive production data of the industrial plant site indicative of production parameters of the industrial plant, to generate using the topology data and the production data, a graph database model associated to the industrial plant site, the graph database model comprising graph elements including graph nodes and graph edges, wherein the graph edges are indicative of relations between those graph nodes connected by a respective graph edge, in accordance to the received topology data, and associating, according to the production data a respective production parameter to a respective graph element; and to provide the generated graph database model. The apparatus comprises one or more processors configured to receive the industrial plant site topology data indicative of items of the industrial plant site that are relevant for the production process, including for instance, storage tanks, transporting units such as conveyor belts, reaction chambers, batch reactors, power generators, sensors, to name a few, and of how these are connected. The one or more processors are also configured to receive production data of the industrial plant site indicative of production parameters of the industrial plant. This production data comprises data pertaining to the nature of the items of the industrial plant site, such as for instance, what type of quantities or parameters can described the item (capacity, flow, temperature, pressure, viscosity, power, power density, speed...). These "fields" are filled with values by the data ascertaining unit for generating the respective individual-element features associated to each item. The one or more processors are configured to generate a graph database model based on the received data, where the node elements and the edge elements are associated with respective production parameters, whose values are not yet necessarily available.

Preferably, the production data comprise material data indicative of a type and/or a property of a material used in the industrial plant site (name, composition, weight, volume, density, viscosity, expiration date, purchase date, etc.), and/or parameter data indicative of a parameter value used in the industrial plant site (maximum/minimum capacity, maximum/minimum speed, maximum/minimum flow, etc.), and/or sensor data indicative of a sensed parameter value (temperature, speed, flow, viscosity, density, etc.) in the industrial plant and/or trend data indicative of a trend of a parameter value (e.g., time series of a given parameter value).

A third aspect of the invention is formed by a computer program product, wherein the computer program product comprises program code means causing an apparatus according to the second aspect to carry out the method according to the second aspect.

The result of the determination of the predicted value of the target production parameter can be provided, for instance, to an output screen or for further processing.

According to a fourth aspect of the invention, control signals generated by a method according to the first aspect and/or by the apparatus according to the second aspect of the invention are disclosed. Control signals according to the fourth aspect can be provided based on the result of the determination, which can be used for a controlling and/or monitoring task of the industrial plant sites. Generally, the control signals can be any signal that allows to control one or more operational units that assist in controlling and/or monitoring an industrial plant site. For example, the control signal can relate to simply visualizing the predicted value on a controlling and/or monitoring user interface such that the user can decide on further actions in his/her task based on the visualization. However, the control signals can also be more complex, for example, can directly allow for a controlling of one or more operation units for producing the product. With respect to a monitoring task, the control signals can also relate to controlling a monitoring interface. For instance, one or more operation assets can be flagged for which routine queries have found unusual operation parameters. Moreover, the control signals can relate to directly causing a maintenance action, or the control signals can cause turning on or off of respective operation units, if respective monitoring queries results fulfil predetermined maintenance orsecurity criteria.

Typically, the regression model obtained using the graph-based features is used to analyse the response of one or more target production parameters to a change of a set of input values of production parameters. Thus, a predicted value indicative of a beneficial or improved process, with respect to a reference set of input values, can be used as an indication that the values used for determining the predicted value are suitable for improving the production process, and thus, the control signals, which can also be indicative of the set of input values used to obtain the predicted value, can be used to change one or more process parameters on the industrial plant site.

In this sense, and according to a fifth aspect, a use of the apparatus according to the second aspect of the invention for controlling and/or monitoring an industrial plant site is presented.

A sixth aspect of the present invention is formed by a method for determining a regression model. The method comprises ascertaining a graph database model associated to the industrial plant site, the graph database model comprising graph elements including graph nodes and graph edges, wherein the graph edges are indicative of relations between those graph nodes connected by a respective graph edge, and associating a respective production parameter to a respective graph element. The method also comprises ascertaining production data of the industrial plant site indicative of values of the production parameters and associating the respective values of the production parameters to the graph element to create individual-element features that depend on the ascertained value of the production parameter for a respective graph node. The method also comprises, for one or more graph nodes of the graph base database model, generating graph-based features by performing an aggregation operation using the values of the production parameters of the graph node itself and at least of an additional graph element selected in accordance to a predetermined aggregation node selection rule; and fitting the individual-element features and the graph-based features for obtaining the regression model.

Yet an additional seventh aspect of the invention closely related to the sixth aspect is directed to an apparatus for determining a regression model, which comprises a model ascertainment unit configured to ascertain a graph database model associated to the industrial plant site, the graph database model comprising graph elements including graph nodes and graph edges, wherein the graph edges are indicative of relations between those graph nodes connected by a respective graph edge, wherein a respective graph element is associated to a respective production parameter, a data ascertaining unit configured to ascertain production data of the industrial plant site indicative of values of the production parameters and to associate the respective values of the production parameters to the graph element to create individual-element features that depend on the ascertained value of the production parameter for a respective graph node, an aggregation unit configured to generate, for one or more graph nodes of the graph base database model, graph-based features by performing an aggregation operation using the values of the production parameters of the graph node itself and at least of an additional graph element selected in accordance to a predetermined aggregation node selection rule, and a fitting unit configured to fit the individual-element features and the graph-based features for obtaining the regression model.

An eighth aspect of the invention is formed by the use of the method for determining a regression model of the sixth aspect and/or of the apparatus for determining a regression model of the seventh aspect, for training a machine learning engine for determining a predicted value of a target production parameter of an industrial plant site. The individual-element features and the graph-based features are used as training data by a machine learning engine. The machine learning engine can be based on a neural network or a decision tree or any other suitable configuration. Real or simulated production data including the values of the production parameters are used as a set of input values for determining the regression model, which will then be used to determine with higher accuracy the predicted value.

It shall be understood that the methods described above, the apparatuses described above and the computer program product described above have similar and/or identical preferred embodiments, in particular, as defined in the dependent claims.

It shall be understood that a preferred embodiment of the present invention can also be any combination of the dependent claim or above embodiments with a respective independent claim.

These and other aspects of the present invention will be apparent from and elucidated with reference to the embodiments described hereafter.

### BRIEF DESCRIPTION OF THE DRAWINGS

In the following drawings:
- Fig. 1: shows schematically an exemplary use of a known regression model for predicting fossil fuel consumption of an industrial plant site as a target value of a production parameter;
- Fig. 2: shows schematically an exemplary use of enhanced regression model in accordance with the invention, for predicting fossil fuel consumption of an industrial plant site as a target value of a production parameter;
- Fig. 3: shows a schematic block diagram of a simplified reaction process carried out in an industrial plant site;
- Fig.4: shows an exemplary graph database model associated to the simplified reaction process of Fig. 3;
- Fig. 5: shows a flow diagram of an exemplary embodiment of a computer implemented method 100 for determining a predicted value of a target production parameter of an industrial plant site;
- Fig. 6: shows schematically and exemplarily a flow diagram for determining individual-element features and graph-based features in accordance with the invention; and
- Fig. 7: shows a schematic block diagram of an exemplary embodiment of an apparatus for determining a predicted value of a target production parameter in accordance with the invention.

### DETAILED DESCRIPTION OF EMBODIMENTS

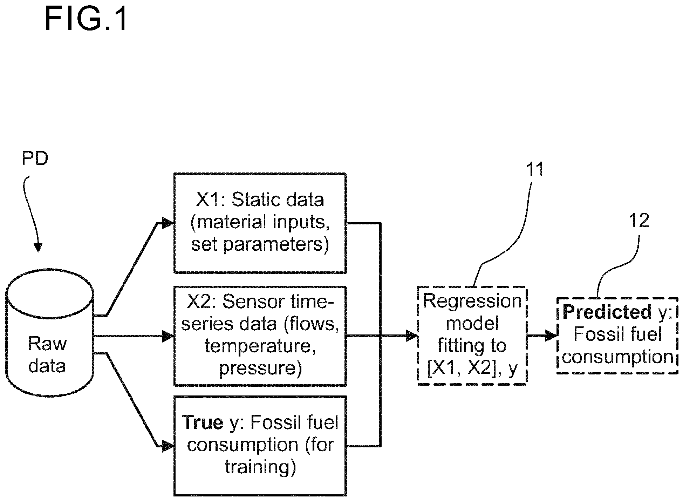

Figure 1 shows schematically an exemplary use of a known regression model for predicting fossil fuel consumption of an industrial plant site as a target value of a production parameter. An industrial plant site processes multiple inputs (material components, utilities, electricity) and generates outputs (material product, waste) usually by carrying out multiple chemical reactions and phase changes in a complex network of steps. Modern chemical plants possess sensors of diverse types (temperature, pressure, concentration) that measure different variables at separate locations along the network of steps.

According to Figure 1, production data PD, labelled as raw data, is received or determined, for instance by one or more sensors. The product data is indicative of values of production parameters and can be divided into static data features X1, and sensor time data features X2. Static data may refer for instance to material inputs, or set parameters, whereas the sensor time data may refer to dynamic data such as flow values, temperature values or pressure values. The raw data PD also includes a value of a given production parameter, such as fossil fuel consumption y, for which a regression model is to be established for a future determination of a predicted value. The static data and the sensor time data, together with the true value y are used to obtain, in a step 11, a regression model, for example a linear regression model, which is then used, in a step 12, to determine a predicted value of fossil fuel consumption in dependence on input values of the static data and the sensor time data. Typically a machine learning engine is trained using the production data PD, e.g. the static data features X1, the sensor time series data features X2 and the true value of the target production parameter in order to obtain the regression model for determining, once the machine learning engine has been trained, the predicted value of the target production parameter.

A major disadvantage of the traditional models, such as the one described with reference to Figure 1, is that the production data (static data-based features X1 and sensor time series data-based features X2) used for obtaining the regression model, e.g., for training the machine learning engine, is assumed to be independent from each other. Traditional models, such as the one discussed with reference to Figure 1 ignore the graph structure of the of the industrial plant site, i.e., the topology of the plant site, and therefore discard the information contained therein, with a negative impact on the quality of the determined predicted values.

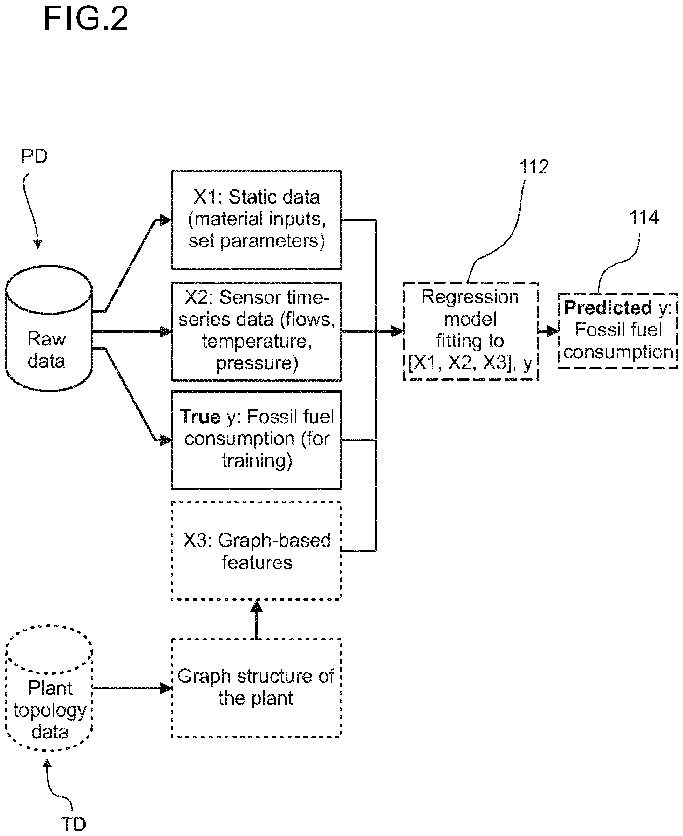

Figure 2 shows schematically an exemplary use of enhanced regression model in accordance with the invention, for predicting fossil fuel consumption of an industrial plant site as a target value of a production parameter. It is noted that the production parameter "fossil fuel consumption" is just an exemplary and not restricted production parameter and that other production parameters can be chosen as target production parameter for obtaining a respective regression model for determining the predicted value. In the example shown in Figure 2, the connectedness of the production data is exploited by determining so call graph-based features X3 using the underlying graph structure of the industrial plant site and adding them to the existing individual-element features (e.g. the static data X1, the sensor time-series data X2) for obtaining, in a step 112, the enhanced regression model which will be then used, in a step 114, for determining the predicted value of the target production parameter (e.g. the predicted fossil fuel consumption).

The graph-based features X3 therefore include information coming not only from individual nodes, but also from neighboring nodes, thereby containing richer information than traditionally creased individual-element features.

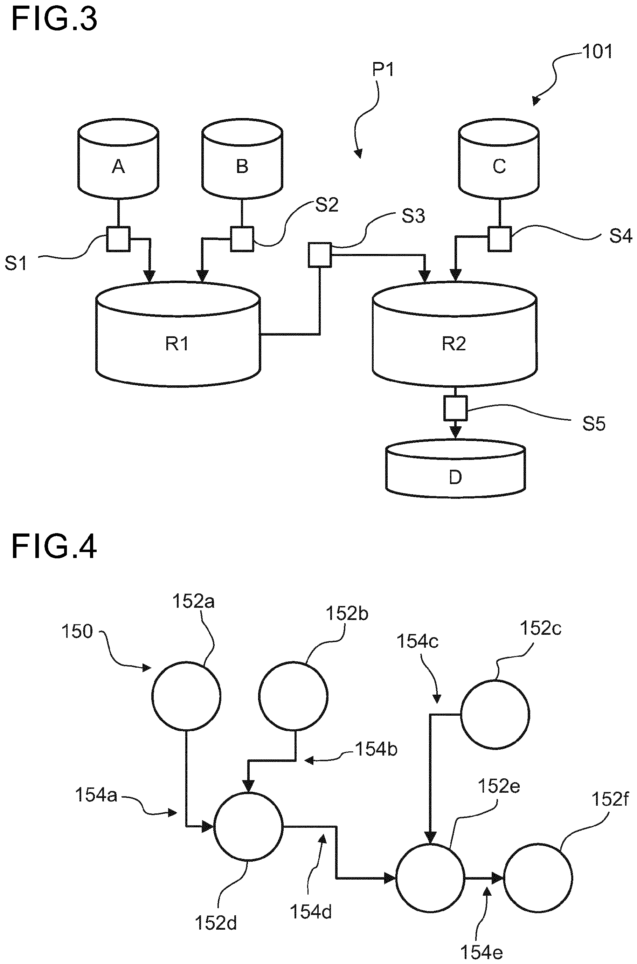

Figure 3 shows a schematic block diagram of a simplified reaction process P1 carried out in an industrial plant site 101, whereas Figure 4 shows an exemplary graph database model associated to the simplified reaction process of Figure 3. Figure 3 shows a first container A and a second container B, connected to a batch reactor R1 via respective lines that include a corresponding flow sensor S1 and S2. The output of the batch reactor R1 is connected to a second batch reactor R2. The flow from R1 to R2 can be determined via a flow sensor S3. The second batch reactor is also connected to a third container C via a dedicated line that includes a corresponding flow sensor S4. An output of batch reactor R2 is connected to a container for collecting the final product via a dedicated line having a corresponding flow sensor S5. Using for instance topology data indicative of how the different components of the industrial plant site are connected and production data indicative of the production parameters that are associated to each components, a graph database model 150 can be generated. The graph database model 150 comprises comprising graph elements including graph nodes 152a-f and graph edges 154a-e, wherein the graph edges 154a-e are indicative of relations between those graph nodes connected by a respective graph edge. Further, and according to the production data, one or more production parameters are associated to a respective graph element. For instance, the node element 152a is representative of the container A and can be associated to the production parameters "type of material", "maximum capacity", "current fill level", "filling date", "expiration date of the stored material", etc. The same applies to node element 152b, which is representative of container B, node element 152c, which is representative of container C, and node element 152f, which is representative of container D. The node elements 152d and 152e are representative of the batch reactors R1 and R2 and can be associated to common and/or different corresponding production parameters such as "maximum capacity", "current fill level", "reaction time", "current reaction temperature", "maximum reaction temperature", "current power consumption", etc. The graph edges represent relations between graph nodes. In this simplified example, the graph edges represent material transport between containers and batch reactors and between batch reactors and are associated to production parameters such as "current flow", "maximum flow" for example.

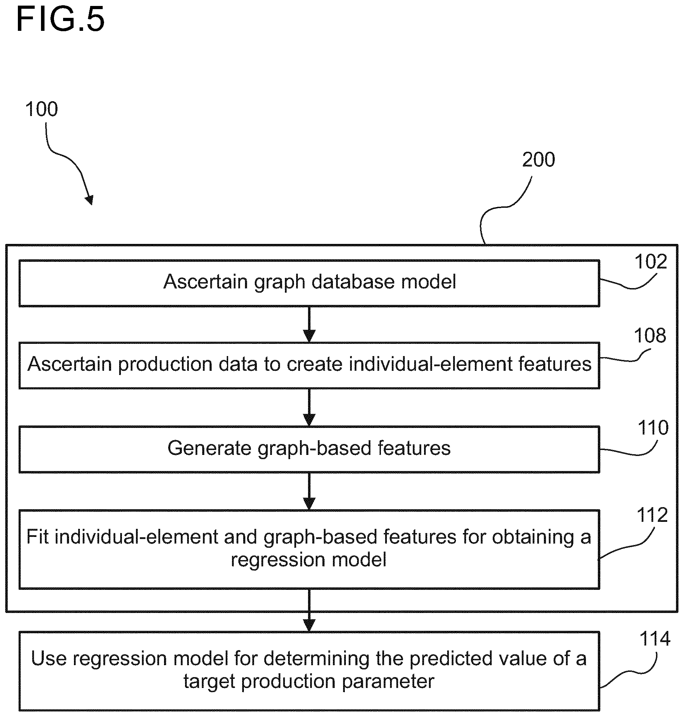

Figure 5 shows a flow diagram of an exemplary embodiment of a computer implemented method 100 for determining a predicted value of a target production parameter of an industrial plant site. The method comprises, in a step 102, ascertaining a graph database model 150 associated to the industrial plant site 101. As explained above with reference to Figure 4, the graph database model 150 comprises graph nodes 152 and graph edges 154, wherein the graph edges are indicative of relations between those graph nodes connected by a respective graph edge. In the graph database model, one or more respective production parameters are associated to one or more respective graph elements. The method also comprises, in a step 108, ascertaining production data of the industrial plant site indicative of values of the production parameters and associating the respective values of the production parameters to the graph element to create individual-element features that depend on the ascertained value of the production parameter for a respective graph element. The values of the production parameters can for instance be inherent to a production parameter associated to a given asset such as the maximum capacity of a container or the maximum flow through a line, or, alternatively can be provided by sensing devices, such as in the case of current filling level of a container, or current flow, temperature, pressure, power consumption, etc. In this manner, the so called individual-element features X1, X2 are created, which depend on the ascertained value of the production parameter for a respective graph element.

Then, according to the method 100, and for one or more graph nodes of the graph database model, respective graph-based features are generated in a step 110. The generation of the graph-based features is done by performing an aggregation operation using the values of the production parameters of the graph node itself and at least of an additional graph element selected in accordance to a predetermined aggregation node selection rule. The node selection rule may be indicative, for example, of a maximum neighbouring level, of whether the values associated to predecessor and/or to successor neighbour nodes should be used for the aggregation operation, or whether the values associated to incoming and/or outgoing edges should be used for the aggregation operation. The method also includes, in a step 112, fitting the individual-element features and the graph-based features for obtaining a regression model. Here, the individual-element features and the graph-based features are used for obtaining a regression model. The regression model can be for instance a linear regression model, a nonlinear regression model such as a higher order polynomial regression model, a multilevel model, etc. Once the regression model is established, a set of input values of a set of production parameter can be used to predict the value of a target production parameter. Thus, the method further includes, in a step 114, determining the predicted value of the target production parameter of the industrial plant site using the obtained regression model. The steps 102, 108, 110, and 112 shown in Figure 5 form a method for determining a regression model that is used for determining the predicted value of a target production parameter.

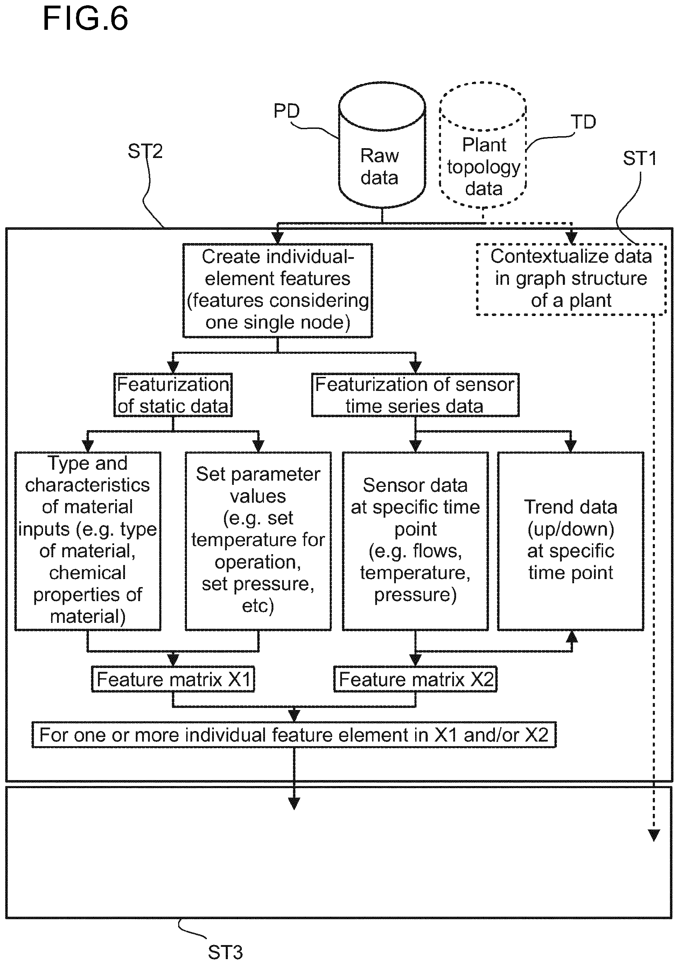

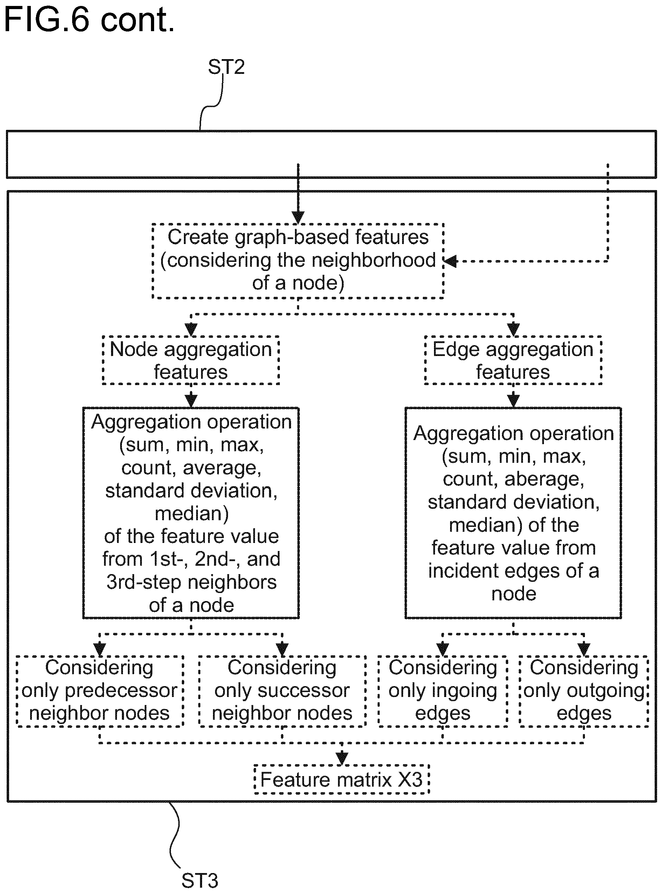

A detailed example of how the individual-element features and the graph-based features are obtained is shown in Figure 6. This is performed in three different stages. In a first stage ST1, the graph database model is generated or otherwise ascertained. Starting from production data PD (raw data), and plant topology data TD, the data is contextualized in a Verbund Graph at different hierarchies, as required for the individual modelling task. Typically, the hierarchy level of the plant is selected. The production data is contextualized as attributes of node elements or attributes of edge elements in the graph. For example, a time series of sensor readings becomes associated with an individual sensor tag position in the plant. In a second stage ST2, the individual-element features X1, X2 are created. These are features that only rely on available production data for a single given node element in the plant network. Featurization of static data (e.g. maximum capacity of a tank or container, type of stored material, set parameters for the operation of a reactor, etc.) produces the feature matrix X1 of individual-element features having a static nature, whereas the featurization of sensor time-series data produces the feature matrix X2 of individual-element features having a dynamic nature. In a third stage ST3, and combining the graph database model ascertained in the first stage ST1 and the individual-element features created in the second stage ST2, a feature matrix X3 of graph-based features is created. The graph-based features capture information from the neighbourhood of a node and therefore from the underlying graph structure in which the node is locates. The graph-based features are created by applying an aggregation operation overtwo or more values of the production parameters. Aggregation operation involve mathematical operations with commutative property and may include, for instance, summing, determining a minimum value, determining a maximum value, determining a count, determining an average, determining a mode, determining a median, determining an standard deviation, etc. The aggregation may involve node element aggregation, where for one or more node elements of the graph database model, an aggregation of the values of two or more individual-element features from X1 and X2 is performed, aggregating over one or more neighbouring nodes. This aggregation can be performed over all 1-, 2-, or 3-step neighbours and can be based either on predecessor and/or successor nodes. Examples of such a node-element aggregation include, determining an average set temperature of all predecessor nodes, or determining a maximum density of materials from all predecessor nodes.

Additionally, or alternatively, the aggregation may involve edge-element aggregation, where for each one or more node elements in the graph database model, an aggregation of the values of two or more individual-element features from X1 and X2 is performed, aggregating over two or more incident edge elements. This aggregation can be based either on incoming or outgoing edges. Examples of such an edge-element aggregation include summing of all ingoing mass flows to a node element, or determining an average temperature of all outgoing flows from a node element.

The benefits of including information from the network structure of an industrial plant site (the graph database model) in a prediction model of a value of a target production parameter, such as for example fossil fuel consumption, can be best illustrated by comparing the performance of alternative approaches.

In a first approach, the predicted value is determined from static data only, ignoring dynamic data such as sensor data. Here, the model feature matrix is based only on the inputs to the plant (material, type, quantity). This results in a simpler model to train but sensor information from within the plant is ignored, as well as the network structure of the plant

In a second approach 2, the predicted value is determined from static data and sensor data but ignores that the sensors belong to a network structure. Here, the model feature matrix is based on inputs to the plant (material, type, quantity) and the sensor information from within the plant. The sensor data is assumed to be independent from each other and the network structure of the plant is ignored.

In an inventive third approach, the predicted value is determined from static data, sensor data, and additionally considers the connected structure of the plant, for example in the physical positioning of the sensors alongside tubing and other connecting elements within the plant. Here, the model feature matrix is based on inputs to the plant (material, type, quantity), the sensor information from within the plant, and the network structure of the plant. This provides most complete information for training a model with better performance.

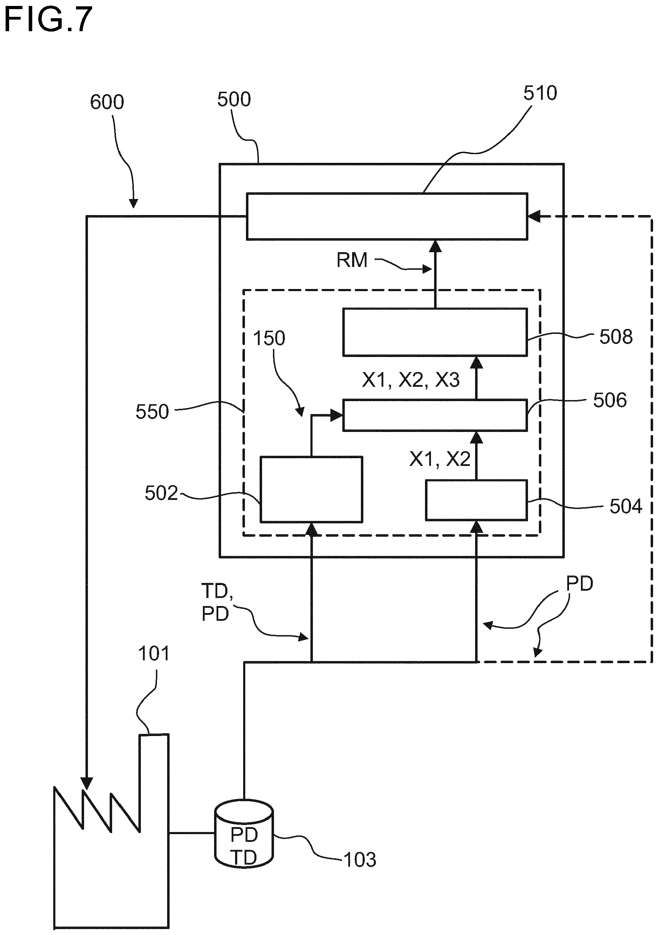

Figure 7 shows a schematic block diagram of an exemplary embodiment of an apparatus 500 for determining a predicted value of a target production parameter of an industrial plant site 101 in accordance with the invention. The industrial plant site of Figure 7 provides topology data TD and production data PD to the apparatus 500. The apparatus 500 comprises an apparatus 550 for determining a regression model RM, which comprises a model ascertainment unit 502 configured to ascertain, i.e., to receive or to determine, a graph database model 150 associated to the industrial plant site 101. As discussed above, the graph database model 150 comprises graph elements including graph nodes 152 and graph edges 154, wherein the graph edges are indicative of relations between those graph nodes connected by a respective graph edge wherein a respective graph element is associated to a respective production parameter. In the particular example shown in Figure 7, the model ascertainment unit is configured as a model generating unit that is configured to receive industrial plant site topology data TD indicative of a topology of the industrial plant site, to receive production data PD of the industrial plant site indicative of production parameters of the industrial plant, to generate using the topology data TD and the production data PD, a graph database model 150 associated to the industrial plant site 101 and to provide the generated graph database model. The apparatus 550 also comprises a data ascertaining unit 504 configured to ascertain, i.e., to determine or to receive, production data of the industrial plant site 101 indicative of values of the production parameters and to associate the respective values of the production parameters to the graph element to create individual-element features X1, X2 that depend on the ascertained value of the production parameter for a respective graph node. For instance, the production data comprises material data indicative of a type and/or a property of a material used in the industrial plant site, and/or parameter data indicative of a parameter value used in the industrial plant site, and/or sensor data indicative of a sensed parameter value in the industrial plant and/or trend data indicative of a trend of a parameter value. The apparatus 550 for determining the regression model RM also comprises an aggregation unit 506 that is configured to generate, for one or more graph nodes of the graph base database model, graph-based features X3 by performing an aggregation operation using the values of the production parameters of the graph node itself and at least of an additional graph element selected in accordance to a predetermined aggregation node selection rule, and a fitting unit 508 configured to fit the individual-element features and the graph-based features for obtaining the regression model. The fitting unit 508 preferably comprises a machine learning unit which is trained using the production data, i.e., the values of the production parameters. The apparatus 550 for determining the regression model RM can by a stand-alone device or can be integrated, for instance as software-implemented unit, in the apparatus 500 for determining the predicted value of a target production parameter, as it is shown in Figure 7. The apparatus 500 for determining the predicted value of a target production parameter also comprises a prediction unit 510 configured to determine, using the regression model RM, the predicted value of the target production parameter of the industrial plant site 101. For this purpose, the prediction unit receives the regression model RM and a set of production data PD as input (see dashed line in Figure 7). The production data received as input can be indicative of test conditions of the plant for which a given value of a target production parameter is to be determined, for instance to study the impact of varying a certain value of the input on the value of target production parameter. Based on this prediction, the apparatus 500 is configured to generate control signals for controlling operation of one or more processes of the industrial plant site 101. The control signals can be, for example, operation instructions for controlling valves, heaters, fans, conveyor belt speeds, reactors, for starting or halting a process, etc. Therefore, the apparatus 500 for determining a predicted value of a target parameter can be used for controlling and/or monitoring the industrial plant site.

Other variations to the disclosed embodiments can be understood and effected by those skilled in the art in practicing the claimed invention, from a study of the drawings, the disclosure, and the appended claims.

For the processes and methods disclosed herein, the operations performed in the processes and methods may be implemented in differing order. Furthermore, the outlined operations are only provided as examples, and some of the operations may be optional, combined into fewer steps and operations, supplemented with further operations, or expanded into additional operations without detracting from the essence of the dis-closed embodiments.

In the claims, the word "comprising" does not exclude other elements or steps, and the indefinite article "a" or "an" does not exclude a plurality.

A single unit or device may fulfil the functions of several items recited in the claims. The mere fact that certain measures are recited in mutually different dependent claims does not indicate that a combination of these measures cannot be used to advantage.

Procedures like the receiving of a graph database, the receiving of a query, the applying of the query and the generating of control data, etc. performed by one or several units or devices can be performed by any other number of units or devices. These procedures can be implemented as program code means of a computer program and/or as dedicated hardware.

A computer program product may be stored/distributed on a suitable medium, such as an optical storage medium or a solid-state medium, supplied together with or as part of other hardware, but may also be distributed in other forms, such as via the Internet or other wired or wireless telecommunication systems.

Any units described herein may be processing units that are part of a classical computing system. Processing units may include a general-purpose processor and may also include a field programmable gate array (FPGA), an application specific integrated circuit (ASIC), or any other specialized circuit. Any memory may be a physical system memory, which may be volatile, non-volatile, or some combination of the two. The term "memory" may include any computer-readable storage media such as a non-volatile mass storage. If the computing system is distributed, the processing and/or memory capability may be distributed as well. The computing system may include multiple structures as "executable components". The term "executable component" is a structure well understood in the field of computing as being a structure that can be software, hardware, or a combination thereof. For instance, when implemented in software, one of ordinary skill in the art would understand that the structure of an executable component may include software objects, routines, methods, and so forth, that may be executed on the computing sys-tem. This may include both an executable component in the heap of a computing sys-tem, or on computer-readable storage media. The structure of the executable component may exist on a computer-readable medium such that, when interpreted by one or more processors of a computing system, e.g., by a processor thread, the computing system is caused to perform a function. Such structure may be computer readable directly by the processors, for instance, as is the case if the executable component were binary, or it may be structured to be interpretable and/or compiled, for instance, whether in a single stage or in multiple stages, so as to generate such binary that is directly interpretable by the processors. In other instances, structures may be hard coded or hard wired logic gates, that are implemented exclusively or near-exclusively in hardware, such as within a field programmable gate array (FPGA), an application specific integrated circuit (ASIC), or any other specialized circuit. Accordingly, the term "executable component" is a term for a structure that is well understood by those of ordinary skill in the art of computing, whether implemented in software, hardware, or a combination. Any embodiments herein are described with reference to acts that are performed by one or more processing units of the computing system. If such acts are implemented in software, one or more processors direct the operation of the computing system in response to having executed computer-executable instructions that constitute an executable component. Computing system may also contain communication channels that allow the computing system to communicate with other computing systems over, for example, network. A "network" is defined as one or more data links that enable the transport of electronic data between computing systems and/or modules and/or other electronic devices. When information is transferred or provided over a network or another communications connection, for ex-ample, either hardwired, wireless, or a combination of hardwired or wireless, to a computing system, the computing system properly views the connection as a transmission medium. Transmission media can include a network and/or data links which can be used to carry desired program code means in the form of computer-executable instructions or data structures and which can be accessed by a general-purpose or special-purpose computing system or combinations. While not all computing systems require a user interface, in some embodiments, the computing system includes a user interface system for use in interfacing with a user. User interfaces act as input or output mechanism to users for instance via displays.

Those skilled in the art will appreciate that at least parts of the invention may be practiced in network computing environments with many types of computing system configurations, including, personal computers, desktop computers, laptop computers, message processors, hand-held devices, multi-processor systems, microprocessor-based or programmable consumer electronics, network PCs, minicomputers, mainframe computers, mobile telephones, PDAs, pagers, routers, switches, datacentres, wearables, such as glasses, and the like. The invention may also be practiced in distributed system environments where local and remote computing system, which are linked, for example, either by hardwired data links, wireless data links, or by a combination of hardwired and wireless data links, through a network, both perform tasks. In a distributed system environment, program modules may be located in both local and remote memory storage devices.

Those skilled in the art will also appreciate that at least parts of the invention may be practiced in a cloud computing environment. Cloud computing environments may be distributed, although this is not required. When distributed, cloud computing environments may be distributed internationally within an organization and/or have components possessed across multiple organizations. In this description and the following claims, "cloud computing" is defined as a model for enabling on-demand network access to a shared pool of configurable computing resources, e.g., networks, servers, storage, applications, and services. The definition of "cloud computing" is not limited to any of the other numerous advantages that can be obtained from such a model when deployed. The computing systems of the figures include various components or functional blocks that may implement the various embodiments disclosed herein as explained. The various components or functional blocks may be implemented on a local computing system or may be implemented on a distributed computing system that includes elements resident in the cloud or that implement aspects of cloud computing. The various components or functional blocks may be implemented as software, hardware, or a combination of software and hardware. The computing systems shown in the figures may include more or less than the components illustrated in the figures and some of the components may be combined as circumstances warrant.

Any reference signs in the claims should not be construed as limiting the scope.

## Claims

1. A computer implemented method (100) for determining a predicted value (PV) of a target production parameter (TPP) of an industrial plant site (101), the method comprising
- ascertaining (102) a graph database model (150) associated to the industrial plant site, the graph database model (150) comprising graph elements (152, 154) including graph nodes (152a-f) and graph edges (154a-e), wherein the graph edges are indicative of relations between those graph nodes connected by a respective graph edge, and wherein one or more respective production parameters are associated to one or more respective graph elements;
- ascertaining (108) production data (PD) of the industrial plant site, the production data being indicative of values of the production parameters (VPP), and associating the respective values of the production parameters to the graph element to create individual-element features (X1, X2) that depend on the ascertained value of the production parameter for a respective graph element;
for one or more graph nodes of the graph base database model, generating (110) a respective graph-based feature (X3) by performing an aggregation operation using the values of the production parameters of the graph node itself and at least of an additional graph element selected in accordance to a predetermined aggregation node selection rule (SR);
fitting (112) the individual-element features and the graph-based features for obtaining a regression model (RM); and
using the regression model, determining (114) the predicted value of the target production parameter of the industrial plant site.

2. The method of claim 1, wherein the individual-element features comprise static features indicative of graph elements associated to a production parameter having a constant value, and dynamic features indicative of a graph elements associated to a production parameter having a variable value, in particular in the form of a time-series comprising values of the production parameters at different points in time.

3. The method of claim 1 or 2, wherein the aggregation operation on a set of input values includes one or more of the operations selected from the group comprising: addition, subtraction and/or multiplication of two or more values of the set of input values; minimum value of a values of the set of input values; maximum value of the values of the set of input values; a count; a statistical average of a the values of the set of input values; a standard deviation of the values of the set of input values.

4. The method of any of the preceding claims, wherein performing the aggregation operation according to the aggregation node selection rule includes performing the aggregation operation using the values of the product parameters of neighbouring graph nodes up to a predetermined neighbouring level with respect to the respective graph node.

5. The method of any of the preceding claims, wherein performing the aggregation operation according to the aggregation node selection rule includes performing the aggregation operation using the values of the product parameters of graph edges connected to the respective graph node.

6. The method of claim 5, wherein the edge elements have a defined direction and the aggregation operation is performed using only the values of incoming graph edges that end at the node element or using only the values of outgoing graph edges that start at the node element.

7. An apparatus (500) for determining a predicted value of a target production parameter of an industrial plant site (101), the apparatus comprising
- a model ascertainment unit (502) configured to ascertain a graph database model (150) associated to the industrial plant site, the graph database model comprising graph elements including graph nodes and graph edges, wherein the graph edges are indicative of relations between those graph nodes connected by a respective graph edge, wherein a respective graph element is associated to a respective production parameter;
- a data ascertaining unit (504) configured to ascertain production data of the industrial plant site indicative of values of the production parameters and to associate the respective values of the production parameters to the graph element to create individual-element features that depend on the ascertained value of the production parameter for a respective graph node;
- an aggregation unit (506) configured to generate, for one or more graph nodes of the graph base database model, graph-based features by performing an aggregation operation using the values of the production parameters of the graph node itself and at least of an additional graph element selected in accordance to a predetermined aggregation node selection rule;
- a fitting unit (508) configured to fit the individual-element features and the graph-based features for obtaining a regression model; and
- a prediction unit (510) configured to determine, using the regression model, the predicted value of the target production parameter of the industrial plant site.

8. The apparatus (500) of claim 7, wherein the model ascertainment unit (502) is configured as a model generating unit (502) that is configured to
- receive industrial plant site topology data (TP) indicative of a topology of the industrial plant site;
- receive production data (PD) of the industrial plant site indicative of production parameters of the industrial plant;
- to generate using the topology data and the production data, a graph database model (150) associated to the industrial plant site, the graph database model comprising graph elements including graph nodes and graph edges, wherein the graph edges are indicative of relations between those graph nodes connected by a respective graph edge, in accordance to the received topology data, and associating, according to the production data a respective production parameter to a respective graph element; and
- to provide the generated graph database model.

9. The apparatus (500) of claim 8, wherein the production data (PD) comprises material data indicative of a type and/or a property of a material used in the industrial plant site, and/or parameter data indicative of a parameter value used in the industrial plant site, and/or sensor data indicative of a sensed parameter value in the industrial plant and/or trend data indicative of a trend of a parameter value.

10. A computer program product, wherein the computer program product comprises program code means causing an apparatus according to claim any of the claims 7 to 9 to carry out the method according to any of claims 1 to 6.

11. Control signals (600) generated by a method according to any of claims 1 to 6 and/or the apparatus according to any of the claims 7 to 9.

12. Use of the apparatus according to any of the claims 7 to 9 for controlling and/or monitoring an industrial plant site (101).

13. A computer implemented method (200) for determining a regression model, the method comprising
- ascertaining (102) a graph database model associated to the industrial plant site, the graph database model comprising graph elements including graph nodes and graph edges, wherein the graph edges are indicative of relations between those graph nodes connected by a respective graph edge, and associating a respective production parameter to a respective graph element;
- ascertaining production data (108) of the industrial plant site indicative of values of the production parameters and associating the respective values of the production parameters to the graph element to create individual-element features that depend on the ascertained value of the production parameter for a respective graph node;
for one or more graph nodes of the graph base database model, generating (110) graph-based features by performing an aggregation operation using the values of the production parameters of the graph node itself and at least of an additional graph element selected in accordance to a predetermined aggregation node selection rule; and
fitting (112) the individual-element features and the graph-based features for obtaining the regression model.

14. Apparatus (550) for determining a regression model (RM), the apparatus comprising
- a model ascertainment unit (502) configured to ascertain a graph database model associated to the industrial plant site, the graph database model comprising graph elements including graph nodes and graph edges, wherein the graph edges are indicative of relations between those graph nodes connected by a respective graph edge, wherein a respective graph element is associated to a respective production parameter;
- a data ascertaining unit (504) configured to ascertain production data of the industrial plant site indicative of values of the production parameters and to associate the respective values of the production parameters to the graph element to create individual-element features that depend on the ascertained value of the production parameter for a respective graph node;
- an aggregation unit (506) configured to generate, for one or more graph nodes of the graph base database model, graph-based features by performing an aggregation operation using the values of the production parameters of the graph node itself and at least of an additional graph element selected in accordance to a predetermined aggregation node selection rule; and
- a fitting unit (508) configured to fit the individual-element features and the graph-based features for obtaining the regression model.

15. Use of the computer implemented method for determining a regression mode of claim 13 and/or of the apparatus for determining a regression model of claim 14, for training a machine learning engine for determining predicted value of a target production parameter of an industrial plant site.
